# EUROPEAN PATENT SPECIFICATION

(11) **EP 3 009 875 B1**
(45) Date of publication and mention of the grant of the patent: **01.04.2020**
(21) Application number: 15188516.7
(22) Date of filing: 06.10.2015
(51) Int. Cl.: G02B 27/14, H01L 33/46, H01L 33/50, G03B 21/20

(54) **OPTICAL WAVELENGTH-CONVERTING DEVICE AND ILLUMINATION SYSTEM USING SAME**
VORRICHTUNG ZUR UMWANDLUNG OPTISCHER WELLENLÄNGEN UND BELEUCHTUNGSSYSTEM DAMIT
DISPOSITIF DE CONVERSION DE LONGUEUR D'ONDE OPTIQUE ET SYSTÈME D'ÉCLAIRAGE UTILISANT CELUI-CI

(30) Priority: 13.10.2014 US 201462063144 P; 29.05.2015 TW 104117325
(43) Date of publication of application: 20.04.2016
(73) Proprietor: Delta Electronics, Inc., Taoyuan Hsien 333 (TW)
(72) Inventor: CHANG, Keh-Su, 333 Kuei San, Taoyuan City (TW); CHOU, Yen-I, 333 Kuei San, Taoyuan City (TW); CHEN, Chi, 333 Kuei San, Taoyuan City (TW); CHEN, Jau-Shiu, 333 Kuei San, Taoyuan City (TW)
(74) Representative: 2K Patentanwälte Blasberg Kewitz & Reichel

(56) References cited:
- WO-A1-2014/021027
- GB-A- 2 237 141
- TW-A- 201 435 469
- US-A1- 2012 039 065
- US-A1- 2013 107 573
- "Fresnel reflection", , 23 August 1996 (1996-08-23), Retrieved from the Internet: URL:https://www.its.bldrdoc.gov/fs-1037/di r-016/_2397.htm [retrieved on 2019-03-12]

## Description

### FIELD OF THE INVENTION

The present invention relates to an optical wavelength-converting device, and more particularly to an optical wavelength-converting device and an illumination system using the same.

### BACKGROUND OF THE INVENTION

In recent years, illumination technology of laser and phosphor is mainly utilized in projectors. Blue light and ultraviolet laser are used for exciting a phosphor wheel to generate color lights, and a color wheel is further used for dividing the required RGB color lights so as to be projected.

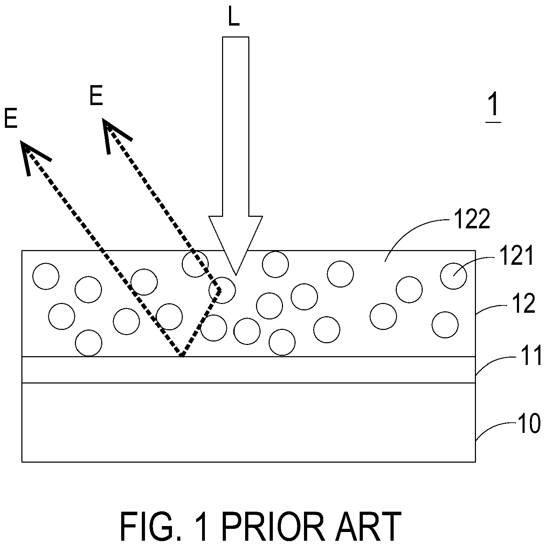

Please refer to FIG. 1. FIG. 1 schematically illustrates the structural view of a conventional reflective phosphor wheel of prior art. In general, a reflective layer 11 is disposed on a substrate 10 in a conventional reflective phosphor wheel 1, and an illuminating layer 12 combining phosphor powder 121 and colloid 122 is directly coated on the reflective layer 11. Laser L is utilized for exciting the phosphor powder 121, and the excited light E generated by the illuminating layer 12 is reflected to one side so as to be outputted by the reflective layer 11. Since the emission spectrum of the phosphor powder covers almost all of the wavelength (400 nm-700 nm) of visible light and exhibits Lambertian configuration, the design of the reflective layer 11 shall be considered over and over again. For example, to avoid the loss of large-angle incident, metallic reflectors, such like argentum (reflection rate 95%-97%) or aluminum (reflection rate 85%-93%), are utilized. However, the reflection rate of the metallic reflector is lower. The reliability of the metallic reflector must be considered because the metallic reflector is easier to be oxidized/corroded and the transition is easier to be occurred. If a higher reflection rate nearing 99% is required, a dielectric layer material is generally utilized. However, the dielectric multilayer reflection coating is much more dependent on the angle of incidence (AOI). With increase of the incident angle, the blue-shift of the reflection spectrum is occurred, and the reflection rate is probably decreased.

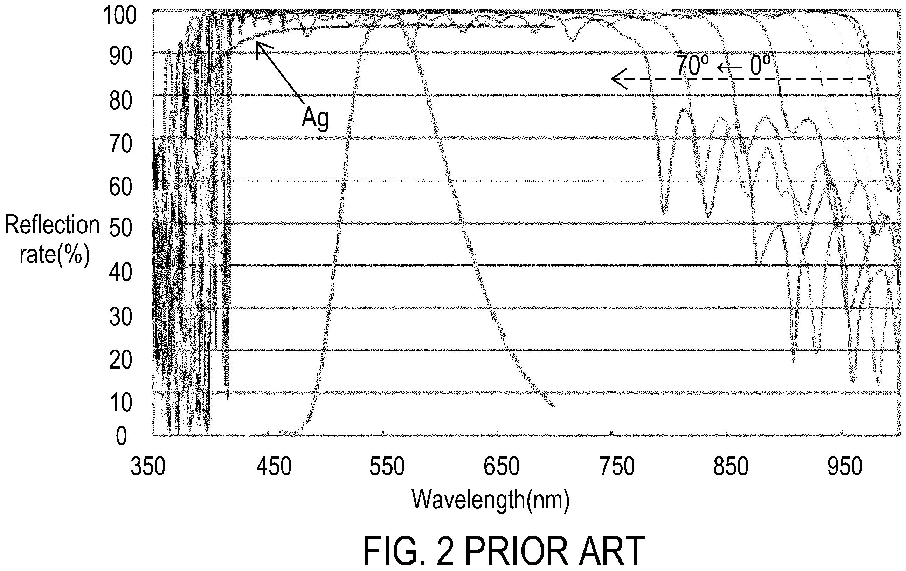

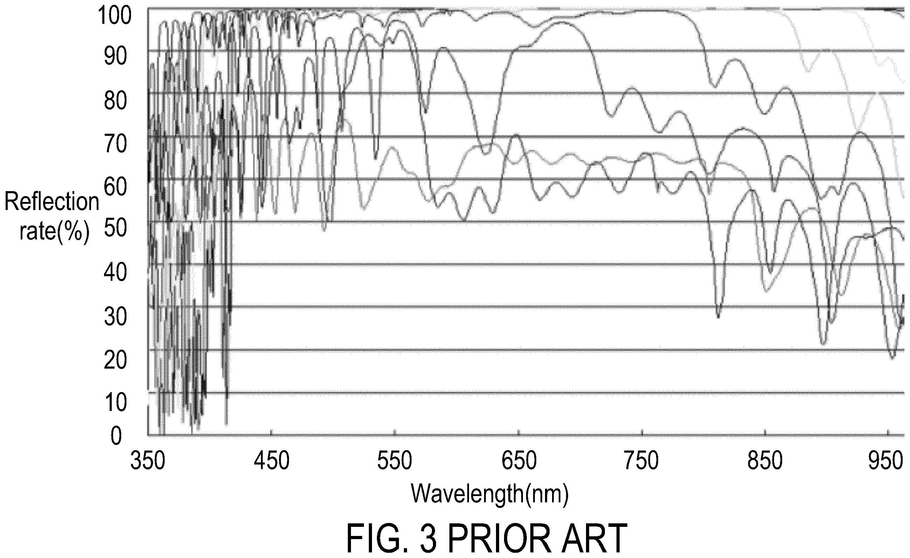

Please refer to FIG. 2. FIG. 2 schematically illustrates the reflection spectrum of a dielectric reflective coating with typical design. Considering the applications of the phosphor wheel, even if the incident angle is greater than 70 degrees, the reflection spectrum is still between 420 nm and 700 nm, which is the wavelength range of visible light (covers the emission spectrum of the general YAG yellow phosphor powder), and even a reflection rate greater than the silver is obtained. However, in the practical applications, the illuminating layer 12 is located on the reflective layer 11 in the structure of the conventional reflective phosphor wheel 1 shown in FIG. 1, the illuminating environment of the phosphor powder 121 is in the colloid having a refraction coefficient n between 1.4 and 1.5 but not the air environment. Please refer to FIG. 3. FIG. 3 schematically illustrates the reflection spectrum of the dielectric reflective coating shown in FIG. 2 in an incident colloid environment. As shown in FIG. 3, after considering the refraction rate of the incident colloid environment, the reflection spectrum is significantly lowered. In particular, the transmission rate of the large-angle incident light is obviously increased, causing the light leakage from the reflective layer 11 to the substrate 10 of the conventional reflective phosphor wheel 1. As a result, the output efficiency of the conventional reflective phosphor wheel 1 is decreased.

In brief, the reflective layers designed for the phosphor wheels cannot satisfy the high reflection rate requirement covering all visible light spectrum (400 nm-700 nm) and all (Angle of Incident, hereinafter "AOI") regime (±0-90 degree(s)). There is a need of providing an optical wavelength-converting device and an illumination system using the same to obviate the drawbacks encountered from the prior art.

TW 201 435 469 A discloses a wavelength conversion device comprising a wavelength conversion layer having a first surface and a second surface facing each other, wherein the first surface is used for receiving an exciting beam, the wavelength conversion layer is used for absorbing the exciting beam to produce an excited beam and emitting the excited beam or the mixture of the excited beam and exciting beam from the first surface and the second surface. A scattering and reflective substrate is stacked with the wavelength conversion layer. However, there is only a single reflection layer provided as a silver plating layer.

GB 2 237 141 A discloses a face plate including a phosphor layer for use with a cathode-ray tube. The cathode rays are radiated onto the phosphor layer, transmitted through an optical interference filter and a glass plate. Reflection layers are not provided.

US 2013/107573 A1 discloses a wavelength conversion element, including a wavelength conversion substrate that absorbs, upon incidence of excitation light, part of the excitation light to emit light of different wavelength from the excitation light. The reflective layer is disposed on one surface of the wavelength conversion substrate. The reflective layer is made of a metal or an alloy.

"Fresnel reflection", 23 August 1996 (1996-08-23), Retrieved from the Internet: URL:https://www.its.bldrdoc.eov/fs-1 037/dir-016/ 2397.htm [retrieved on 2019-03-12] explains characteristics of Fresnel reflection.

EP 2 881 648 A1 discloses a wavelength converting device including a heat dissipating member, a wavelength converting member disposed on the heat dissipating member. Fig. 3 of this document discloses an embodiment the wavelength converting device comprises a third reflecting layer made of a dielectric multilayer between a first reflecting layer and a second reflecting layer. The dielectric multilayer of this third reflecting layer is configured to reflect a major percentage of light which is mainly perpendicularly incident to the first reflecting layer.

### SUMMARY OF THE INVENTION

It is an object of the present invention to provide an enhanced optical wavelength-converting device and an illumination system using the same in order to overcome at least one of the above-mentioned drawbacks encountered by the prior art, particularly in order to effectively enhance the reflection rate of the composite reflection layer and the output efficiency of the larger angle wide spectrum .

The above problems are solved by an optical wavelength-converting device according to claim 1 and by an illumination system according to claim 15. Further advantageous embodiments are the subject-matter of the dependent claims.

According to the present invention a composite reflective layer is provided in the optical wavelength-converting device to thereby construct an AOI-independent metallic reflective layer underlying a dielectric multi-layer reflector for large AOI leakage compensation.

By utilizing a composite reflection layer comprising a first reflection layer and a second reflection layer and adjusting the reflection spectrum of the first reflection layer through the second reflection layer, the reflection rate of the composite reflection layer is effectively enhanced, and the output efficiency of the larger angle wide spectrum is also enhanced.

In accordance with an aspect of the present invention, there is provided an optical wavelength-converting device used for converting a first waveband light. The optical wavelength-converting device includes a substrate, a phosphor layer and a composite reflection layer. The phosphor layer is disposed on the substrate for converting the first waveband light into a second waveband light. The composite reflection layer includes a first reflection layer and a second reflection layer. The first reflection layer is disposed between the substrate and the phosphor layer and adjacent to the substrate for reflecting the second waveband light, wherein the first reflection layer is a metallic reflection layer. The second reflection layer is disposed between the first reflection layer and the phosphor layer for adjusting the reflection spectrum of the first reflection layer, thereby enhancing the reflection rate of the composite reflection layer, wherein the second reflection layer comprises a dielectric multilayer film and the stacks of layers of the dielectric multilayer film are at least three, so that the reflection rate of the composite reflection layer (22) for wavelengths between 400 nm and 700 nm at an angle of incidence of 60° is above 80%, and wherein the second waveband light is reflected by the first reflection layer and the second reflection layer, such that the second waveband light is transmitted through the phosphor layer so as to be outputted in a direction opposite to the first waveband light.

In accordance with another aspect of the present invention, there is provided an illumination system. The illumination system includes a solid-state light-emitting element and an optical wavelength-converting device as outlined above.

The above contents of the present invention will become more readily apparent to those ordinarily skilled in the art after reviewing the following detailed description and accompanying drawings.

### BRIEF DESCRIPTION OF THE DRAWINGS

- FIG. 1: schematically illustrates the structural view of a conventional reflective phosphor wheel of prior art;
- FIG. 2: schematically illustrates the reflection spectrum of a dielectric reflective coating with typical design;
- FIG. 3: schematically illustrates the reflection spectrum of the dielectric reflective coating shown in FIG. 2 in an incident colloid environment;
- FIG. 4: schematically illustrates the configuration of an illumination system according to an embodiment of the present invention;
- FIG. 5: schematically illustrates the structural view of an optical wavelength-converting device according to an embodiment of the present invention; and
- FIG. 6: schematically illustrates the reflection spectrum of a composite reflection layer of the optical wavelength-converting device according to an embodiment of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

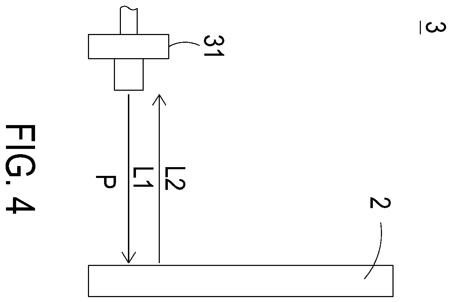

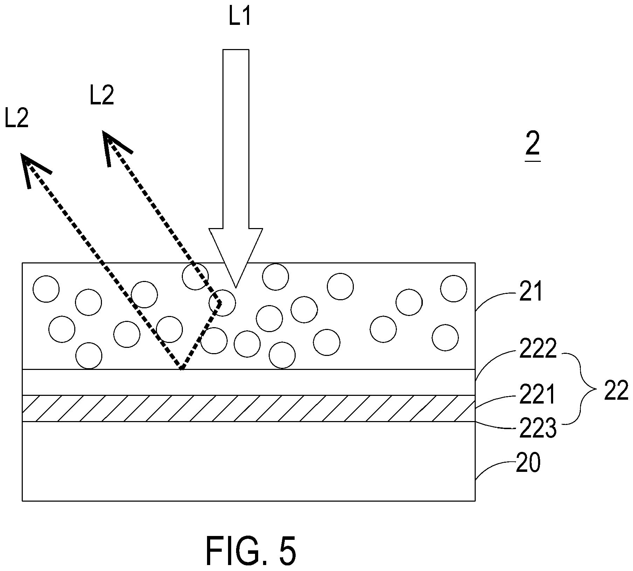

Please refer to FIG. 4 and FIG. 5. FIG. 4 schematically illustrates the configuration of an illumination system according to an embodiment of the present invention. FIG. 5 schematically illustrates the structural view of an optical wavelength-converting device according to an embodiment of the present invention. As shown in FIG. 4 and FIG. 5, an optical wavelength-converting device 2 of the present invention is used for converting a first waveband light L1, which is emitted by a solid-state light-emitting element 31 of an illumination system 3. The solid-state light-emitting element 31 is not limited to a laser light-emitting element, and is configured for emitting the first waveband light L1 to an optical path P. The optical wavelength-converting device 2 is not limited to a phosphor wheel or a phosphor plate, and is disposed on the optical path P for converting the first waveband light L1.

In some embodiments, the optical wavelength-converting device 2 includes a substrate 20, a phosphor layer 21 and a composite reflection layer 22. The phosphor layer 21 is disposed on the substrate 20 for converting the first waveband light L1 into a second waveband light L2. The composite reflection layer 22 includes a first reflection layer 221 and a second reflection layer 222. The first reflection layer 221 is disposed between the substrate 20 and the phosphor layer 21 and adjacent to the substrate 20 for reflecting the second waveband light L2, such that the second waveband light is transmitted through the phosphor layer 21 so as to be outputted. The second reflection layer 222 is disposed between the first reflection layer 221 and the phosphor layer 21 for adjusting the reflection spectrum of the first reflection layer 221, thereby enhancing the reflection rate of the composite reflection layer 22.

In some embodiments, the first reflection layer 221 is plated and formed on the surface of the substrate 20, and the second reflection layer 222 is adhered on the first reflection layer 221. In some embodiments, the composite reflection layer 22 further includes an adhesion layer 223. The adhesion layer 223 is disposed between the first reflection layer 221 and the substrate 20. The adhesion layer 223 is a titanium adhesion layer or a chromium adhesion layer.

In addition, the first reflection layer 221 of the composite reflection layer 22 of the optical wavelength-converting device 2 of the present invention is a metallic reflection layer, and the second reflection layer 222 is preferably a physical vacuum coated dielectric reflection multilayer, but not limited thereto. The first reflection layer 221 is plated and made of aluminum, argentum or an alloy of aluminum or argentum to increase the reflection rate of visible light. Furthermore, since aurum is excellent for reflecting the infrared light, the first reflection layer 221 may also be plated and made of aurum to increase the reflection rate of visible light and infrared light with incident angle between ±70°. In brief, the first reflection layer 221 is selected from aluminum, argentum, aurum or an alloy consisting at least one of aluminum, argentum and aurum for meeting the practical demands. In some embodiments, the thickness of the first reflection layer 221 is greater than 30 nanometers.

The second reflection layer 222 includes a dielectric multilayer film, and the stacks of layers of the dielectric multilayer film are at least 3, and are preferably 7, with an incident angle design within ±70° (i.e. totally 140°), but not limited thereto. The stacks of layers of the dielectric multilayer film may be adjusted for meeting the practical demands, thereby optimizing the adjustment of the reflection spectrum of the first reflection layer 221, in which the present invention teaches. In some embodiments, the second reflection layer 222 is a distributed Bragg reflector (DBR), but not limited herein.

In some embodiments, the first waveband light L1 emitted by the solid-state light-emitting element 31 of the illumination system 3 is blue light or ultraviolet light, and the converted second waveband light L2 is the light with wavelength greater than 460 nanometers. The second reflection layer 222 is configured to adjust the reflection spectrum of the first reflection layer 221 in regard to the light with wavelength greater than 600 nanometers (i.e. red light), thereby enhancing the reflection rate of red light of the composite reflection layer 22. In some embodiments, the second reflection layer 222 is configured to adjust the the light with desired wavelength greater than 500 nanometers (i.e. green light).

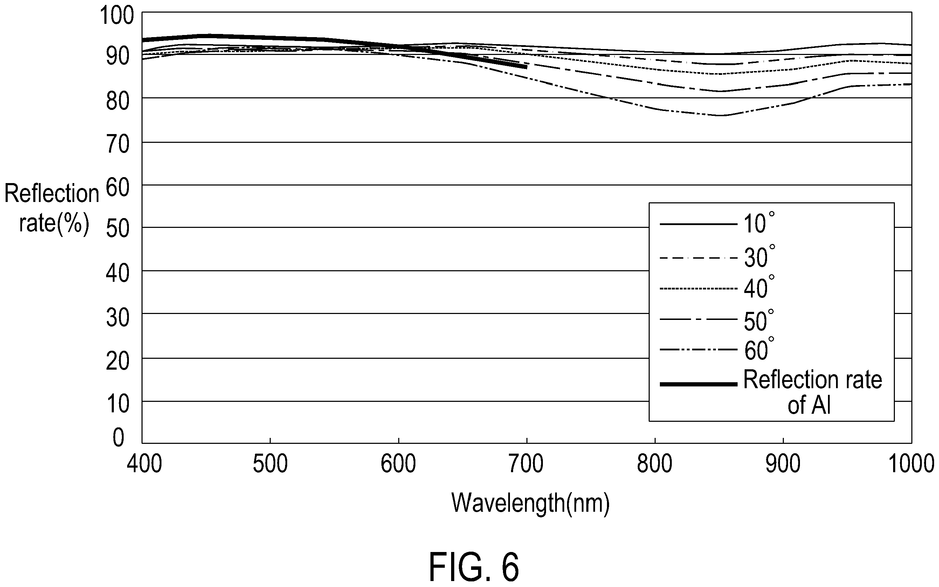

Please refer to FIG.5, FIG. 6 and the following Table I. FIG. 6 schematically illustrates the reflection spectrum of a composite reflection layer of the optical wavelength-converting device according to an embodiment of the present invention. This embodiment emphasizes on the red light wavelength regime (>600nm). It is worthy to note that the present disclosure can also be utilized for increasing the reflection rate of the green light wavelength regime (>500nm). Table I illustrates the output of yellow light, green light and red light of the aluminum reflective layer of prior art, the dielectric reflective coating of prior art, and the composite reflection layer of the present invention. It should be noted that Table I is illustrated based on the output of the aluminum reflective layer of prior art.

**Table I**

| | Aluminum reflective layer | Dielectric reflective coating | Composite reflection layer |
|---|---|---|---|
| Output of yellow light (460-700 nm) | 100.0% | 98.2% | 102.4% |
| Output of green light (460-580 nm) | 100.0% | 96.8% | 101.7% |
| Output of red light (490-700 nm) | 100.0% | 100.7% | 103.5% |

As shown in FIG. 5, FIG. 6 and Table I, the reflection rate of the composite reflection layer 22 of the optical wavelength-converting device 2 of the present invention at large-angle (about 60 degrees) and wavelength between 400-700 nanometers still maintains 80% above. Meanwhile, by the composite reflection layer 22, the output of yellow light is enhanced to 102.4%, thereby enhancing the output efficiency. The output of green light and the output of red light are increased 1.7% and 3.5% in comparison with the aluminum reflective layer of prior art, respectively.

Furthermore, by the design of the composite reflection layer 22, the reflection spectrum of the first reflection layer 221 can be adjusted by the second reflection layer 222, and further the reflection rate of every color light region can be adjusted, thereby enhancing the output of the color light that is desired to be enhanced. Please refer to Table I, Table II and Table III. Table II and Table III illustrate the reflection rates of the aluminum reflective layer of prior art and the composite reflection layer of the present invention in regard to every color light in different embodiments.

**Table II**

| | Aluminum reflective layer | Composite reflection layer |
|---|---|---|
| Reflection rate of yellow light (460-700 nm) | 100.0% | 100.2% |
| Reflection rate of green light (460-580 nm) | 100.0% | 97.5% |
| Reflection rate of red light (490-700 nm) | 100.0% | 104.5% |

**Table III**

| | Aluminum reflective layer | Composite reflection layer |
|---|---|---|
| Reflection rate of yellow light (460-700 nm) | 100.0% | 106.1% |
| Reflection rate of green light (460-580 nm) | 100.0% | 102.3% |
| Reflection rate of red light (490-700 nm) | 100.0% | 111.9% |

In conclusion of Table I, Table II and Table III, by changing the configuration of the composite reflection layer 22 of the optical wavelength-converting device 2 of the present invention, the output luminance of red light is enhanced from 103.5% to 111.9% by the adjustment of the composite reflection layer 22. In other words, the reflection rate of red light of the reflection layer 22 is increased from 84%-92.5% to 95%-97%, which is beneficial to the color configuration of the projector. This embodiment clearly describes that the configuration of the composite reflection layer 22 can be changed for enhancing the output luminance of red light (>600nm). Certainly, the configuration of the composite reflection layer 22 can be changed for enhancing the output luminance of green light (>500nm).

From the above description, the present invention provides an optical wavelength-converting device and an illumination system using the same in order to overcome at least one of the above-mentioned drawbacks encountered by the prior arts. By utilizing a composite reflection layer comprising a first reflection layer and a second reflection layer and adjusting the reflection spectrum of the first reflection layer through the second reflection layer, the reflection rate of the composite reflection layer is effectively enhanced, and the output efficiency of the larger angle wide spectrum is also enhanced.

## Claims

1. An optical wavelength-converting device (2) for converting a first waveband light (L1), comprising:
a substrate (20);
a phosphor layer (21) disposed on the substrate (20) for converting the first waveband light (L1) into a second waveband light (L2); and
a composite reflection layer (22) comprising:
a first reflection layer (221) disposed between the substrate (20) and the phosphor layer (21) and adjacent to the substrate (20) for reflecting the second waveband light (L2), wherein the first reflection layer (221) is a metallic reflection layer; and
a second reflection layer (222) disposed between the first reflection layer (221) and the phosphor layer (21) for adjusting the reflection spectrum of the first reflection layer (221), wherein the second reflection layer (222) comprises a dielectric multilayer film and the stacks of layers of the dielectric multilayer film are at least three, so that the reflection rate of the composite reflection layer (22) for wavelengths between 400 nm and 700 nm at an angle of incidence of 60° is above 80%, and
wherein the second waveband light (L2) is reflected by the first reflection layer (221) and the second reflection layer (222), such that the second waveband light (L2) is transmitted through the phosphor layer (21) so as to be outputted in a direction opposite to the first waveband light (L1).

2. The optical wavelength-converting device (2) according to claim 1, wherein the composite reflection layer (22) further comprises an adhesion layer (223) disposed between the first reflection layer (221) and the substrate (20), and the adhesion layer (223) is a titanium adhesion layer or a chromium adhesion layer.

3. The optical wavelength-converting device (2) according to claim 1 or 2, wherein the first waveband light (L1) is blue light or ultraviolet light, and the second waveband light (L2) is light of a wavelength greater than 460 nanometers.

4. The optical wavelength-converting device (2) according to any of the preceding claims, wherein the second reflection layer (222) is configured to adjust the reflection spectrum of the first reflection layer (221) in regard to the light with wavelength greater than 500 nanometers, and the green light reflection rate of the composite reflection layer (22) is increased at least 1.7% by the second reflection layer (222).

5. The optical wavelength-converting device (2) according to any of claims 1 to 3, wherein the second reflection layer (222) is configured to adjust the reflection spectrum of the first reflection layer (221) in regard to the light with wavelength greater than 600 nanometers, and the red light reflection rate of the composite reflection layer (22) is increased at least 3.5% by the second reflection layer (222).

6. The optical wavelength-converting device (2) according to any of the preceding claims, wherein the first reflection layer (221) is plated and made of aluminum, argentum or an alloy of aluminum or argentum.

7. The optical wavelength-converting device (2) according to any of claims 1 to 5, wherein the first reflection layer (221) is plated and made of aurum.

8. The optical wavelength-converting device (2) according to any of claims 1 to 5, wherein the thickness of the first reflection layer (221) is greater than 30 nanometers.

9. The optical wavelength-converting device (2) according to any of the preceding claims,
wherein the thickness of the first reflection layer (221) is greater than 30 nanometers, and the first reflection layer (221) is selected from aluminum, argentum, aurum or an alloy consisting at least one of aluminum, argentum and aurum for reflecting the second waveband light (L2).

10. The optical wavelength-converting device (2) according to any of the preceding claims,
wherein the first waveband light (L1) is blue light or ultraviolet light, the second waveband light (L2) is a light with wavelength greater than 460 nanometers and the thickness of the first reflection layer (221) is greater than 30 nanometers.

11. The optical wavelength-converting device (2) according to any of the preceding claims,
wherein the first reflection layer (221) is configured for increasing the reflection rate of the second waveband light (L2), and
the second reflection layer (222) comprises a dielectric multilayer film or a distributed Bragg reflector with incident angle between ±70°.

12. The optical wavelength-converting device (2) according to any of the preceding claims,
wherein a composite reflection layer (22) is provided for increasing the reflection rate of light with incident angle between ±70° and adjusting the reflection rate of at least a color light region of the second waveband light (L2), thereby enhancing the output intensity of color light, which is transmitted through the phosphor layer (21) of the color light region.

13. The optical wavelength-converting device (2) according to any of the preceding claims,
wherein the first reflection layer (221) is plated and formed on the surface of the substrate (20) for reflecting the second waveband light (L2),
and the second reflection layer (222) is adhered on the first reflection layer (221) and disposed between the first reflection layer (221) and the phosphor layer (21).

14. The optical wavelength-converting device (2) according to any of the preceding claims, further comprising an adhesion layer (223) disposed between the first reflection layer (221) and the substrate (20), wherein the second reflection layer (222) is adhered on the first reflection layer (221) and disposed between the first reflection layer (221) and the phosphor layer (21), and the adhesion layer (223) is made of metal material.

15. An illumination system (3), comprising:
a solid-state light-emitting element (31) emitting a first waveband light (L1) to an optical path (P); and
an optical wavelength-converting device (2) according to any of the preceding claims, which disposed on the optical path (P).

## Patentansprüche

1. Optische Vorrichtung zur Wandlung von Wellenlängen (2), zum Wandeln eines ersten Wellenlängenbereiches (L1), umfassend:
ein Substrat (20);
eine Phosphorschicht (21), die auf dem Substrat (20) angeordnet ist, um das Licht (L1) des ersten Wellenlängenbereiches in ein Licht (L2) eines zweiten Wellenlängenbereiches umzuwandeln; und
eine zusammengesetzte Reflexionsschicht (22), umfassend:
eine erste Reflexionsschicht (221), die zwischen dem Substrat (20) und der Phosphorschicht (21) und angrenzend an das Substrat (20) angeordnet ist, um das Licht (L2) des zweiten Wellenlängenbereichs zu reflektieren, wobei die erste Reflexionsschicht (221) eine metallische Reflexionsschicht ist; und
eine zweite Reflexionsschicht (222), die zwischen der ersten Reflexionsschicht (221) und der Phosphorschicht (21) angeordnet ist, um das Reflexionsspektrum der ersten Reflexionsschicht (221) einzustellen, wobei die zweite Reflexionsschicht (222) einen dielektrischen Mehrschichtfilm umfasst und die Stapel von Schichten des dielektrischen Mehrschichtfilms mindestens drei sind, so dass das Reflexionsvermögen der zusammengesetzten Reflexionsschicht (22) für Wellenlängen zwischen 400 nm und 700 nm bei einem Einfallswinkel von 60° größer als 80% ist, und
wobei das Licht (L2) des zweiten Wellenlängenbereiches durch die erste Reflexionsschicht (221) und die zweite Reflexionsschicht (222) reflektiert wird, so dass das Licht (L2) des zweiten Wellenlängenbereiches sich durch die Phosphorschicht (21) ausbreitet, so dass es in einer dem Licht (L1) des ersten Wellenlängenbereiches entgegengesetzten Richtung ausgegeben wird.

2. Optische Vorrichtung zur Wandlung von Wellenlängen (2) nach Anspruch 1, wobei die zusammengesetzte Reflexionsschicht (22) weiterhin eine zwischen der ersten Reflexionsschicht (221) und dem Substrat (20) angeordnete Haftschicht (223) umfasst, und wobei die Haftschicht (223) eine Titan-Haftschicht oder eine Chrom-Haftschicht ist.

3. Optische Vorrichtung zur Wandlung von Wellenlängen (2) nach Anspruch 1 oder 2, wobei das Licht des ersten Wellenlängenbereiches (L1) blaues Licht oder ultraviolettes Licht ist und das Licht des ersten Wellenlängenbereiches (L2) Licht einer Wellenlänge von mehr als 460 Nanometern ist.

4. Optische Vorrichtung zur Wandlung von Wellenlängen (2) nach einem der vorhergehenden Ansprüche, wobei die zweite Reflexionsschicht (222) so ausgelegt ist, dass diese das Reflexionsspektrum der ersten Reflexionsschicht (221) in Bezug auf das Licht mit einer Wellenlänge von mehr als 500 Nanometern einstellt, und die Grünlicht-Reflexionsrate der zusammengesetzten Reflexionsschicht (22) durch die zweite Reflexionsschicht (222) um mindestens 1,7% erhöht wird.

5. Optische Vorrichtung zur Wandlung von Wellenlängen (2) nach einem der Ansprüche 1 bis 3, wobei die zweite Reflexionsschicht (222) konfiguriert ist, um das Reflexionsspektrum der ersten Reflexionsschicht (221) in Bezug auf das Licht mit einer Wellenlänge von mehr als 600 Nanometern einzustellen, und wobei das Rotlicht-Reflexionsvermögen der zusammengesetzten Reflexionsschicht (22) durch die zweite Reflexionsschicht (222) um mindestens 3,5% erhöht wird.

6. Optische Vorrichtung zur Wandlung von Wellenlängen (2) nach einem der vorhergehenden Ansprüche, wobei die erste Reflexionsschicht (221) galvanisch aufgebracht ist und aus Aluminium, Silber oder einer Legierung von Aluminium oder Silber hergestellt ist.

7. Optische Vorrichtung zur Wandlung von Wellenlängen (2) nach einem der Ansprüche 1 bis 5, wobei die erste Reflexionsschicht (221) galvanisch aufgebracht ist und aus Gold hergestellt ist.

8. Optische Vorrichtung zur Wandlung von Wellenlängen (2) nach einem der Ansprüche 1 bis 5, wobei die Dicke der ersten Reflexionsschicht (221) größer als 30 Nanometer ist.

9. Optische Vorrichtung zur Wandlung von Wellenlängen (2) nach einem der vorhergehenden Ansprüche,
wobei die Dicke der ersten Reflexionsschicht (221) größer als 30 Nanometer ist und die erste Reflexionsschicht (221) aus Aluminium, Silber, Gold oder einer Legierung, die mindestens aus Aluminium, Silber oder Gold besteht, ausgewählt ist, um das Licht (L2) des zweiten Wellenlängenbereichs zu reflektieren.

10. Optische Vorrichtung zur Wandlung von Wellenlängen (2) nach einem der vorhergehenden Ansprüche,
wobei das Licht des ersten Wellenlängenbereichs (L1) blaues Licht oder ultraviolettes Licht ist, das Licht des zweiten Wellenlängenbereichs (L2) Licht mit einer Wellenlänge von mehr als 460 Nanometern ist und die Dicke der ersten Reflexionsschicht (221) größer als 30 Nanometer ist.

11. Optische Vorrichtung zur Wandlung von Wellenlängen (2) nach einem der vorhergehenden Ansprüche,
wobei die erste Reflexionsschicht (221) zur Erhöhung des Reflexionsvermögens des Lichts (L2) des zweiten Wellenlängenbereichs ausgelegt ist, und
die zweite Reflexionsschicht (222) aus einem dielektrischen Mehrschichtfilm oder einem Bragg-Reflektor mit einem Einfallswinkel zwischen ±70° besteht.

12. Optische Vorrichtung zur Wandlung von Wellenlängen (2) nach einem der vorhergehenden Ansprüche,
wobei eine zusammengesetzte Reflexionsschicht (22) vorgesehen ist, um das Reflexionsvermögen von Licht mit einem Einfallswinkel zwischen ±70° zu erhöhen und das Reflexionsvermögen mindestens eines Farblichtbereichs des Lichts des zweiten Wellenlängenbereichs (L2) einzustellen, wodurch die Ausgangsintensität von Farblicht, das durch die Phosphorschicht (21) des Farblichtbereichs durchgelassen wird, erhöht wird.

13. Optische Vorrichtung zur Wandlung von Wellenlängen (2) nach einem der vorhergehenden Ansprüche,
wobei die erste Reflexionsschicht (221) auf der Oberfläche des Substrats (20) galvanisch aufgebracht und ausgebildet ist, um das Licht (L2) des zweiten Wellenlängenbereichs zu reflektieren,
und wobei die zweite Reflexionsschicht (222) auf die erste Reflexionsschicht (221) aufgeklebt und zwischen der ersten Reflexionsschicht (221) und der Phosphorschicht (21) angeordnet ist.

14. Optische Vorrichtung zur Wandlung von Wellenlängen (2) nach einem der vorhergehenden Ansprüche, weiterhin umfassend eine Adhäsionsschicht (223), die zwischen der ersten Reflexionsschicht (221) und dem Substrat (20) angeordnet ist, wobei die zweite Reflexionsschicht (222) an der ersten Reflexionsschicht (221) haftet und zwischen der ersten Reflexionsschicht (221) und der Phosphorschicht (21) angeordnet ist, und wobei die Adhäsionsschicht (223) aus einem Metallmaterial hergestellt ist.

15. Beleuchtungssystem (3), umfassend:
ein Licht emittierendes Festkörperelement (31), das Licht (L1) eines ersten Wellenlängenbereiches in einen optischen Pfad (P) aussendet; und
eine optische Vorrichtung zur Wandlung von Wellenlängen (2) nach einem der vorhergehenden Ansprüche, die auf dem optischen Weg (P) angeordnet ist.

## Revendications

1. Dispositif de conversion de longueur d'onde optique (2) pour convertir une lumière de première gamme d'ondes (L1), comprenant :
un substrat (20) ;
une couche de luminophores (21) disposée sur le substrat (20) pour convertir la lumière de première gamme d'ondes (L1) en une lumière de seconde gamme d'ondes (L2) ; et
une couche de réflexion composite (22) comprenant :
une première couche de réflexion (221) disposée entre le substrat (20) et la couche de luminophores (21) et adjacente au substrat (20) pour réfléchir la lumière de seconde gamme d'ondes (L2), la première couche de réflexion (221) étant une couche de réflexion métallique ; et
une seconde couche de réflexion (222) disposée entre la première couche de réflexion (221) et la couche de luminophores (21) pour ajuster le spectre de réflexion de la première couche de réflexion (221), la seconde couche de réflexion (222) comprenant un film multicouche diélectrique et les empilements de couches du film multicouche diélectrique étant au moins trois, de telle sorte que le taux de réflexion de la couche de réflexion composite (22) pour des longueurs d'onde entre 400 nm et 700 nm à un angle d'incidence de 60° est supérieur à 80 %, et
la lumière de seconde gamme d'ondes (L2) étant réfléchie par la première couche de réflexion (221) et la seconde couche de réflexion (222), de telle sorte que la lumière de seconde gamme d'ondes (L2) est transmise à travers la couche de luminophores (21) de façon à être délivrée dans une direction opposée à la lumière de première gamme d'ondes (L1).

2. Dispositif de conversion de longueur d'onde optique (2) selon la revendication 1, dans lequel la couche de réflexion composite (22) comprend en outre une couche d'adhérence (223) disposée entre la première couche de réflexion (221) et le substrat (20), et la couche d'adhérence (223) est une couche d'adhérence en titane ou une couche d'adhérence en chrome.

3. Dispositif de conversion de longueur d'onde optique (2) selon la revendication 1 ou 2, dans lequel la lumière de première gamme d'ondes (L1) est de la lumière bleue ou de la lumière ultraviolette, et la lumière de seconde gamme d'ondes (L2) est de la lumière d'une longueur d'onde supérieure à 460 nanomètres.

4. Dispositif de conversion de longueur d'onde optique (2) selon l'une quelconque des revendications précédentes, dans lequel la seconde couche de réflexion (222) est configurée pour ajuster le spectre de réflexion de la première couche de réflexion (221) quant à la lumière ayant une longueur d'onde supérieure à 500 nanomètres, et le taux de réflexion de lumière verte de la couche de réflexion composite (22) est accru d'au moins 1,7 % par la seconde couche de réflexion (222).

5. Dispositif de conversion de longueur d'onde optique (2) selon l'une quelconque des revendications 1 à 3, dans lequel la seconde couche de réflexion (222) est configurée pour ajuster le spectre de réflexion de la première couche de réflexion (221) quant à la lumière ayant une longueur d'onde supérieure à 600 nanomètres, et le taux de réflexion de lumière rouge de la couche de réflexion composite (22) est accru d'au moins 3,5 % par la seconde couche de réflexion (222).

6. Dispositif de conversion de longueur d'onde optique (2) selon l'une quelconque des revendications précédentes, dans lequel la première couche de réflexion (221) est plaquée et faite d'aluminium, d'argentum ou d'un alliage d'aluminium ou d'argentum.

7. Dispositif de conversion de longueur d'onde optique (2) selon l'une quelconque des revendications 1 à 5, dans lequel la première couche de réflexion (221) est plaquée et faite d'aurum.

8. Dispositif de conversion de longueur d'onde optique (2) selon l'une quelconque des revendications 1 à 5, dans lequel l'épaisseur de la première couche de réflexion (221) est supérieure à 30 nanomètres.

9. Dispositif de conversion de longueur d'onde optique (2) selon l'une quelconque des revendications précédentes, dans lequel l'épaisseur de la première couche de réflexion (221) est supérieure à 30 nanomètres, et la première couche de réflexion (221) est choisie parmi l'aluminium, l'argentum, l'aurum ou un alliage constitué d'au moins un parmi l'aluminium, l'argentum et l'aurum pour réfléchir la lumière de seconde gamme d'ondes (L2).

10. Dispositif de conversion de longueur d'onde optique (2) selon l'une quelconque des revendications précédentes, dans lequel la lumière de première gamme d'ondes (L1) est de la lumière bleue ou de la lumière ultraviolette, la lumière de seconde gamme d'ondes (L2) est une lumière ayant une longueur d'onde supérieure à 460 nanomètres, et l'épaisseur de la première couche de réflexion (221) est supérieure à 30 nanomètres.

11. Dispositif de conversion de longueur d'onde optique (2) selon l'une quelconque des revendications précédentes,
dans lequel la première couche de réflexion (221) est configurée pour accroître le taux de réflexion de la lumière de seconde gamme d'ondes (L2), et
la seconde couche de réflexion (222) comprend un film multicouche diélectrique ou un réflecteur de Bragg distribué avec un angle d'incidence entre ±70°.

12. Dispositif de conversion de longueur d'onde optique (2) selon l'une quelconque des revendications précédentes, dans lequel une couche de réflexion composite (22) est prévue pour accroître le taux de réflexion de lumière avec un angle d'incidence entre ±70° et pour ajuster le taux de réflexion d'au moins une région de lumière de couleur de la lumière de seconde gamme d'ondes (L2), améliorant ainsi l'intensité de sortie de lumière de couleur, qui est transmise à travers la couche de luminophores (21) de la région de lumière de couleur.

13. Dispositif de conversion de longueur d'onde optique (2) selon l'une quelconque des revendications précédentes,
dans lequel la première couche de réflexion (221) est plaquée et formée sur la surface du substrat (20) pour réfléchir la lumière de seconde gamme d'ondes (L2),
et la seconde couche de réflexion (222) est amenée à adhérer sur la première couche de réflexion (221) et est disposée entre la première couche de réflexion (221) et la couche de luminophores (21).

14. Dispositif de conversion de longueur d'onde optique (2) selon l'une quelconque des revendications précédentes, comprenant en outre une couche d'adhérence (223) disposée entre la première couche de réflexion (221) et le substrat (20), la seconde couche de réflexion (222) étant amenée à adhérer sur la première couche de réflexion (221) et disposée entre la première couche de réflexion (221) et la couche de luminophores (21), et la couche d'adhérence (223) étant faite de matériau métallique.

15. Système d'éclairage (3), comprenant :
un élément électroluminescent à semi-conducteurs (31) émettant une lumière de première gamme d'ondes (L1) vers un trajet optique (P) ; et
un dispositif de conversion de longueur d'onde optique (2) selon l'une quelconque des revendications précédentes, qui est disposé sur le trajet optique (P).
